# EUROPÄISCHE PATENTSCHRIFT

(11) **EP 0 712 706 B1**
(45) Veröffentlichungstag und Bekanntmachung des Hinweises auf die Patenterteilung: **12.06.2002**
(21) Anmeldenummer: 95114939.2
(22) Anmeldetag: 22.09.1995
(51) Int. Cl.: B29C 33/38, B29C 33/42, B23K 26/00, B29C 33/40

(54) **Verfahren zur Herstellung einer Prägewalze zum kontinuierlichen Prägen der Oberfläche einer thermoplastischen Folie**
Process for manufacturing an embossing roll for continuously embossing the surface of a thermoplastic sheet
Procédé de fabrication d'un rouleau graineur pour l'estampage en continu de la surface d'une feuille thermoplastique

(30) Priorität: 19.11.1994 DE 4441216
(43) Veröffentlichungstag der Anmeldung: 22.05.1996
(73) Patentinhaber: Benecke-Kaliko Aktiengesellschaft, D-30419 Hannover (DE)
(72) Erfinder: Minke, Jürgen, Dipl.-Ing., D-30853 Langenhagen (DE); Vogt, Günter, Dipl.-Designer, D-30827 Garbsen (DE)
(74) Vertreter: Leine, Sigurd, Dipl.-Ing.

(56) Entgegenhaltungen:
- EP-A- 0 536 625
- DE-A- 3 405 985
- DE-A- 4 213 106
- DE-A- 4 324 970
- US-A- 4 652 721
- US-A- 5 356 364
- PATENT ABSTRACTS OF JAPAN vol. 013, no. 241 (C-604), 6.Juni 1989 & JP 01 051165 A (TOYO INK MFG CO LTD), 27.Februar 1989,
- PATENT ABSTRACTS OF JAPAN vol. 014, no. 127 (M-0947), 9.März 1990 & JP 01 320154 A (FUJI SYST KK;OTHERS: 01), 26.Dezember 1989,
- PATENT ABSTRACTS OF JAPAN vol. 012, no. 302 (M-732), 17.August 1988 & JP 63 076722 A (IG TECH RES INC), 7.April 1988,

## Beschreibung

Die Erfindung betrifft ein Verfahren der im Oberbegriff des Anspruchs 1 genannten Art zur Herstellung einer Prägewalze zum kontinuierlichen Prägen der Oberfläche einer thermoplastischen Folie.

Durch DE 34 05 985 C2 ist ein Verfahren bekannt, bei dem die Oberflächenstruktur eine Narbung darstellt. Dabei wird auf die Oberfläche einer diese Narbung aufweisenden Narbungsvorlage ein Kunstharz als gleichmäßig dicke Schicht aufgegossen oder aufgestrichen und danach zu einer Prägemutter ausgehärtet bzw. vernetzt. Die Prägemutter wird anschließend abgezogen und auf die Umfangsfläche der Prägewalze aufgebracht. Dabei würde normalerweise eine Stoßkante zwischen den in Umfangsrichtung gegeneinanderstoßenden Rändern der Prägemutter entstehen, so daß bei dem späteren Prägen mit einer solchen Prägewalze keine kontinuierliche Narbung entstehen würde.

Um diesen Nachteil zu vermeiden, ist es durch die genannte Schrift bekannt, Zwischenschritte durchzuführen, indem mit der Prägemutter zunächst unter Hitze und Druck die Oberfläche einer thermoplastischen Folie geprägt wird, die nach dem Prägen mit ihren gegenüberliegenden Rändern gegeneinanderstoßend zu einem Schlauch geformt wird. An diesen Rändern ist zwar wiederum eine Stoßkante unvermeidbar, jedoch wird nach der Lehre dieser bekannten Schrift diese Stoßkante dadurch beseitigt, daß die thermoplastische Folie im Bereich der gegeneinanderstoßenden Ränder unter Hitze und Druck mit der Prägemutter noch einmal überprägt und so eine endlose Positivform erzeugt wird, auf die eine weitere Schicht Silikonkautschuk aufgegossen oder aufgestrichen wird, die zu einer Prägetochter vulkanisiert wird, die von der Positivform abgezogen und mit der negativen Prägeoberfläche nach außen auf die Umfangsfläche der Prägewalze aufgeklebt wird. Das Ergebnis dieses bekannten Verfahrens ist dann eine Prägewalze mit einer Silikonoberfläche, die keine Stoßkante aufweist. Somit lassen sich mit dieser nach dem bekannten Verfahren hergestellten Prägewalze Bahnen von thermoplastischer Folie unter Hitze und Druck prägen, bei denen die Oberflächenstruktur kontinuierlich ist und keine Stoßkanten aufweist.

Dieses bekannte Verfahren führt also zu dem gewünschten Ergebnis einer Silikonprägewalze mit kontinuierlicher Oberflächenstruktur, jedoch ist ein wesentlicher Nachteil dieses bekannten Verfahrens der große Aufwand für die Durchführung der Zwischenschritte, um die kontinuierliche Oberflächenstruktur zu schaffen.

Durch DE 42 13 106 A1 ist ein Verfahren zur Bearbeitung der Oberflächen von Werkstücken bekannt, bei dem die Strahlung einer Laserstrahlungsquelle über eine Strahlformungseinrichtung auf die zu bearbeitende Oberfläche gerichtet ist und die Strahlung nach Maßgabe der Sollgeometrie der herzustellenden Werkstückoberfläche individuell gesteuert wird. Auf diese Weise soll eine Materialabtragung zwecks Herstellung der dreidimensionalen Sollgeometrie des Werkstücks erzielt werden. Das Verfahren zielt dabei auf die Erzeugung einer numerisch variierbaren Maske, mit deren Hilfe die Bearbeitung in Form einer Oberflächenstrukturierung nach Art eines vorgegebenen dreidimensionalen Musters schichtenweise erfolgt. Als Beispiel ist beim Stand der Technik die Herstellung von Mutterwalzen für Prägevorgänge genannt, deren Endlosstruktur nahtlos sein müsse, was bei der vorbekannten Gießtechnik und der damit verbundenen Stoßkanten eine arbeits- und lohnkostenintensive Nachbearbeitung erfordere. Bei diesen bekannten Mutterwalzen ist also an Metallwalzen gedacht, in deren Oberfläche sich nur verhältnismäßig einfache und regelmäßige Prägestrukturen einbringen lassen. Zum Prägen von Feinstrukturen, die beispielsweise von natürlichen Lederoberflächen abgenommen sind, sind nach diesem bekannten Verfahren hergestellte Metallwalzen nicht geeignet.

Durch US 5 356 364 ist ein Verfahren der im Oberbegriff des Anspruchs 1 genannten Art bekannt, durch das die Oberflächen von zwei Walzen hergestellt werden sollen, von denen die eine negative Prägeelemente und die andere positive Prägeelemente in ihrer Oberfläche aufweist und die so mit ihren Oberflächen zusammenwirken sollen, daß in einer Folie eine Wellenstruktur erzeugt wird. Bei dieser Wellenstruktur handelt es sich im wesentlichen um eine Flächenstruktur für die in dieser Schrift typisch die Darstellung von Schmetterlingen angegeben ist.

Der Erfindung liegt die Aufgabe zugrunde, ein Verfahren der betreffenden Art zur Herstellung einer Prägewalze zum kontinuierlichen Prägen der Oberfläche einer thermoplastischen Folie zu schaffen, das einfach und kostengünstig durchzuführen ist und zu einer Prägewalze führt, mit der auch sehr feine Oberflächenstrukturen geprägt werden können, die beispielsweise natürlichen Ledervorlagen entsprechen.

Die der Erfindung zugrundeliegende Aufgabe wird durch die im Kennzeichen des Anspruchs angegebene Lehre gelöst.

Die Erfindung beruht auf dem Grundgedanken, die Prägestruktur in der aus Silikongummi bestehenden Prägeoberfläche einer Prägewalze unmittelbar durch Bearbeitung mittels eines Laserstrahls zu erzeugen, der in an sich bekannter Weise orts- und oberflächenabhängig entsprechend der Oberflächenstruktur einer Mustervorlage bewegt wird. Es hat sich überraschend gezeigt, daß eine nach dem erfindungsgemäßen Verfahren hergestellte Prägewalze eine hohe Vorlagentreue, insbesondere auch bei sehr feinen Oberflächenstrukturen, hat.

Ein weiterer Vorteil der erfindungsgemäßen Lehre besteht darin, daß die Prägeoberfläche der Prägewalze unmittelbar ohne irgendwelche Zwischenschritte erzeugt wird. Das bedeutet eine beträchtliche Zeitersparnis gegenüber dem eingangs genannten betreffenden Verfahren, bei dem das Herstellen und Bearbeiten der einzelnen Schichten mehrere Tage in Anspruch nimmt, wobei vor allem noch die jeweiligen Aushärtungs- und Vernetzungszeiten der flüssig aufgebrachten Materialien und Klebstoffe hinzukommen, ehe die Walze zum Prägen verwendet werden kann. Insgesamt nehmen die Verfahrensschritte mehr als 14 Tage in Anspruch. Außerdem sind zwei Walzenkörper erforderlich. Alles das wird bei dem vorliegenden Verfahren vermieden.

Da nach dem erfindungsgemäßen Verfahren eine Silikonprägewalze in sehr kurzer Zeit erzeugbar ist, können auch in kurzer Zeit Prägewalzen unterschiedlicher Oberflächenstruktur hergestellt werden. Dadurch ist eine schnelle Anpassung an Kundenwünsche insbesondere auch bei kleineren Aufträgen möglich.

Beispiel: Auf eine Stahlwalze wird zunächst eine Schicht von Silikongummi aufgebracht, deren Umfangsfläche glatt ist. Die Walze wird gedreht und dabei ein Laserstrahl parallel zur Drehachse der Walze über die Umfangsfläche geführt, und zwar so, daß im wesentlichen die gesamte Umfangsfläche überstrichen wird. Während dieser Bewegung des Laserstrahls relativ zu der Oberfläche der Walze wird die Intensität des Laserstrahls gesteuert, und zwar in Abhängigkeit von einem Steuersignal, das durch die Abtastung der Oberfläche einer Mustervorlage gewonnen wird. Die Abtastung der Oberfläche erfolgt optisch oder mechanisch, und entsprechend dieser Abtastung wird ein elektrisches Signal erzeugt, das unmittelbar zur Steuerung des Lasers verwendet wird. Eine Alternative besteht darin, daß das durch Abtastung der Mustervorlage gewonnene elektrische Signal zwischengespeichert und derart bearbeitet wird, daß Stoßkanten vermieden sind. Das Ergebnis ist dann eine Oberflächenstruktur in der aus Silikongummi bestehenden Außenfläche der Prägewalze ohne jede Stoßkanten oder abrupten Übergänge.

## Patentansprüche

1. Verfahren zur Herstellung einer Prägewalze zum kontinuierlichen Prägen der Oberfläche einer thermoplastischen Folie, bei dem zunächst eine Walze hergestellt wird, die wenigstens im Bereich ihrer Umfangsfläche aus Silikongummi besteht und deren Umfangsfläche glatt ist, daß ein Laserstrahl auf die Umfangsfläche gerichtet wird, daß der Laserstrahl relativ zu der Umfangsfläche der Walze bewegt und dabei in Übereinstimmung mit dem jeweiligen Ort der Oberflächenstruktur gesteuert wird, **dadurch gekennzeichnet, daß** die Tiefenstruktur einer Oberfläche einer Mustervorlage, insbesondere einer Narbung, optisch oder mechanisch abgetastet und in Abhängigkeit davon ein elektrisches Steuersignal erzeugt wird, mit dem die Intensität des Laserstrahls gesteuert wird, derart, daß die Oberflächen-Tiefenstruktur der Mustervorlage als Negativform in der Außenfläche der Walze erzeugt wird.

## Claims

1. A process for manufacturing an embossing roll for continuously embossing the surface of a thermoplastic sheet, where firstly a roll is produced which is comprised of silicon at least in the region of its peripheral area, and the peripheral area of which is smooth, that a laser bear is directed onto the peripheral area, that the laser beam moves relative to the peripheral area of the roll and is thereby controlled in accordance with the respective position of the surface structure, **characterised in that** the surface depth structure of a pattern sample, in particular of a grain or pocking, is optically or mechanically scanned and an electrical signal is produced in dependence with same, the intensity of the laser beam being controlled by same such that the surface depth structure of the pattern sample is produced as a negative form in the outer surface of the roll.

## Revendications

1. Procédé de fabrication d'un rouleau graineur pour le matriçage continu de la surface d'une feuille thermoplastique, dans lequel est fabriqué tout d'abord un rouleau qui est constitué de caoutchouc ou silicone au moins dans la zone de sa surface périphérique et dont la surface périphérique est lisse, dans lequel un faisceau laser est dirigé sur la surface périphérique, dans lequel le faisceau laser est déplacé par rapport à la surface périphérique du rouleau et est commandé en conformité avec chaque emplacement de la structure de surface,
**caractérisé en ce que** la structure en creux d'une surface d'un modèle, en particulier d'un grain, est scruté optiquement ou mécaniquement et en fonction de cela, un signal électrique de commande est généré, avec lequel l'intensité du faisceau laser est commandée de telle sorte que la structure en creux de la surface du modèle soit reproduite en négatif dans la surface extérieure du rouleau.
